# DEMANDE DE BREVET EUROPEEN

(11) **EP 3 114 928 A1**
(43) Date de publication de la demande: **11.01.2017**
(21) Numéro de dépôt: 16178647.0
(22) Date de dépôt: 08.07.2016
(51) Int. Cl.: A01L 3/00, A01L 7/00, A01L 15/00

(54) **ORTHESE POUR CHEVAL**

(30) Priorité: 08.07.2015 FR 1501452
(71) Demandeur: Guilliot, Nicolas, 19310 Saint Robert (FR)
(72) Inventeur: Guilliot, Nicolas, 19310 Saint Robert (FR)
(74) Mandataire: Aquinov

(57) **Abrégé**

L'objet de l'invention est une orthèse pour un sabot d'un cheval C, muni ou non d'un fer à cheval FC, comprenant deux demi-orthèses (10A, 10B) ayant chacune une face supérieure (18A, 18B) plane et une face inférieure (20A, 20B) de forme convexe, des moyens de liaison (14) entre lesdites deux demi-orthèses et des moyens de liaison (12) desdites deux demi-orthèses audit sabot.

## Description

La présente invention concerne une orthèse pour cheval.

On sait que les chevaux disposent de fers afin de limiter l'usure des sabots et d'avoir une meilleure assise au sol lorsqu'ils se déplacent aux différentes allures.

En de rares occasions les chevaux peuvent aussi être déferrés.

Il existe donc deux situations qu'il convient de prendre en compte.

On sait que les chevaux en stabulation sont contraints à rester sur place, dans un espace limité, celui du box.

Les membres des chevaux sont alors peu sollicités et la vascularisation des membres reste limitée, ce qui ralentit l'évacuation des toxines. Comme pour tout sportif notamment, le corolaire d'une élimination lente des toxines reste une augmentation de la durée de récupération notamment.

De même, de très nombreuses pathologies peuvent être traitées en complément ou au principal par des postures du cheval, en box, ou en marche.

Aussi, la présente invention propose une orthèse pour permettre de remplir de très nombreuses fonctions.

Du fait des nombreuses applications, il est imaginable de prévoir une orthèse pour une pathologie ou plus généralement pour une application mais dans ce cas, il faut prévoir un grand nombre d'orthèses.

Le but est de proposer une orthèse qui permet d'une part un montage sur des sabots ferrés ou déferrés, et d'autre part de corriger, compenser certaines postures afin de traiter différentes pathologies.

Ainsi, dans certains cas, il peut être utile de désaxer le mouvement antéro-postérieur de l'axe du membre vers l'extérieur ou vers l'intérieur.

Dans le cas d'une fourbure chronique, l'orthèse selon la présente invention est portée en permanence jusqu'à disparition des symptômes.

Lorsque le cheval a été opéré avec une chirurgie lourde qui immobilise le cheval en box, l'orthèse est portée sur chaque sabot et en permanence de façon à solliciter régulièrement les membres et le squelette de façon générale.

En cas de fractures sur un membre, l'orthèse est posée sur le membre opposé en permanence. Dans le cas d'une tendinite du fléchisseur profond qui affecte le tendon ou une dermite de son ligament accessoire, le cheval sera équipé d'une orthèse selon la présente invention, pendant plusieurs semaines, lors de la phase aigüe de ces pathologies.

Pour une remise en tension du fléchisseur superficiel du doigt ou du suspenseur du boulet, seul le port de l'orthèse la nuit est préconisé, sur de longues périodes.

Après une entorse du boulet, le port d'une orthèse selon l'invention, toutes les nuits, après cicatrisation des ligaments, permet de lutter contre un ankylosement de l'articulation.

Les lymphangites aigues seront traitées par une pose d'orthèses toutes les nuits.

L'orthèse selon la présente invention présente un intérêt dans la récupération passive après effort voire entre deux efforts.

Il est même constaté que l'orthèse peut permettre la pousse de corne chez des chevaux qui produisent peu de corne.

Si les applications sont très nombreuses, on comprend qu'il est nécessaire de disposer du moins d'orthèses et de pouvoir les disposer ou les retirer aisément puisque le port peut être de courte durée.

Ce sont les buts de la présente invention.

On connaît des dispositifs de fer à chevaux classiques c'est-à-dire des fers à chevaux, en arc de cercle et pouvant être utilisés pour toutes les allures des chevaux qui les portent.

C'est ainsi que l'on connaît la demande de brevet suisse CH 166 375 qui concerne un fer à cheval, plat, avec deux arcs de cercle montés pivotants l'un par rapport à l'autre autour d'un axe pour faire varier l'ouverture.

Ce fer à cheval comporte des ergots en partie supérieure, inclinés vers l'intérieur, destinés à venir en appui sur la paroi du sabot et une tige à double filetages inversés, qui assure un serrage desdits ergots sur le sabot par pivotement autour de l'axe, les ergots venant en appui contre la paroi du sabot, tel un cerclage.

On constate que les tiges filetées sont montées sur des axes de chaque côté du fer de façon à autoriser une articulation et comportent un filetage qui vient visser dans une douille filetée à double pas inversés, en partie médiane.

Ce montage sur axes est nécessaire pour permettre une grande ouverture du fer afin de positionner le sabot entre les ergots.

Ce fer est ainsi monté sans nécessiter de clous.

Tout maréchal ferrant serait surpris d'un tel agencement dans lequel le fer ne présente aucune pince sur l'avant et dans lequel la courbure du fer est théorique et non ajustable exactement au profil du sabot du cheval, et enfin dans lequel il subsiste une tête d'axe qui est en contact avec le sol.

On connaît également le document FR 370 858 qui concerne un fer à cheval de forme classique, plat, classique du même type que celui du document précédent, avec des moyens de serrage également du même type, mais positionnés au droit du talon. De plus ce dispositif comporte des pointes de diamant sur la face en contact avec le sol, qui sont interchangeables, de façon à prévenir l'usure du fer lui-même.

Le document US 1 401 074 vise un fer à cheval classique également, plat, avec un montage extrêmement proche de celui de la demande de brevet Suisse ci-dessus.

Afin de réaliser le serrage, il est prévu une clé amovible qui pénètre dans le fer et autorise un serrage.

Ces différents documents montrent des agencements de fer classique, plat, en courbe et en un seul tenant et comportant un axe de liaison permanent, destiné à permettre une ouverture du fer qui est un fer de type connu, sans aucune fonction thérapeutique, ni même de correction et ne vise aucune application vétérinaire.

Il est à noter que ces agencements sont très anciens et les traitements vétérinaires envisagés sont de découverte récente et ce n'est que depuis l'avènement des traumatismes liés aux compétitions sportives notamment que les traitements évoqués ci-avant ont été découverts et mis en pratique.

L'invention est maintenant décrite en détail en regard des dessins annexés qui illustrent de façon schématique un mode de réalisation particulier, non limitatif, les différentes figures montrant :
- Figure 1 : une vue en perspective de dessous d'une orthèse selon la présente invention, mise en place sur un sabot ferré,
- Figure 2 : une vue en perspective avant de dessus d'un sabot ferré muni de ladite orthèse,
- Figure 3 : une vue en élévation latérale du sabot des figures 1 et 2,
- Figures 4A et 4B : une vue d'un membre équipé d'une même orthèse, avec position pivotée à 180° en fonction des applications.

La présente invention concerne une orthèse 10 comprenant deux demi-orthèses 10A et 10B indépendantes, prévues pour être associées à l'une des pattes P d'un cheval.

Ces demi-orthèses sont munies de moyens de liaison 12 entre elles et de moyens de fixation 14 sur un sabot 16 d'un cheval, en l'occurrence un sabot équipé d'un fer à cheval FC plat de type connu.

Chacune des deux demi orthèses 10A et 10B est de forme orthopédique. Chaque demi-orthèse est un bloc d'une longueur égale sensiblement à la longueur de la branche du fer à cheval en place dans le cas présent ou de la sole du sabot quand il n'y a pas de fer à cheval.

Chaque demi-orthèse est sensiblement rectiligne et d'une largeur sensiblement du même ordre de grandeur que celle d'une branche de fer à cheval.

Chaque demi-orthèse est plane sur la face supérieure 18A, 18B destinée à venir en contact et à coopérer en appui surfacique important soit avec un fer à cheval normal, quand le sabot est ferré soit avec la sole du sabot lorsque le sabot est déferré.

Cet appui surfacique important permet une bonne reprise des efforts c'est-à-dire la reprise du poids du cheval et des impacts lors des mouvements, étant rappelé que seul le pas est autorisé, les autres allures étant interdites dans le cas de ces traitements.

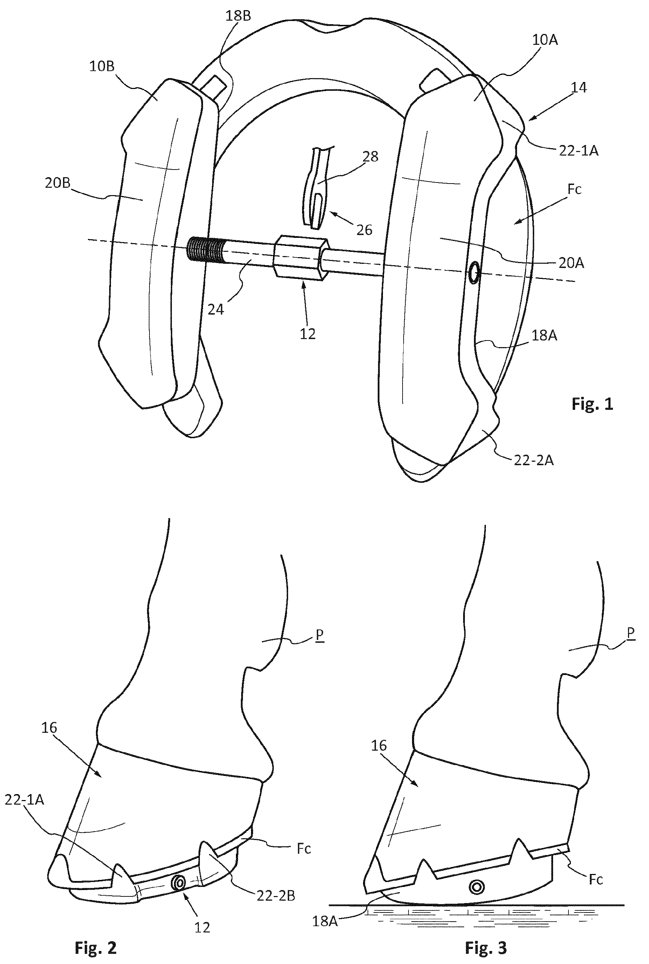

La face inférieure 20A, 20B de chaque demi-orthèse est, dans le mode représenté, de forme convexe par rapport à l'axe longitudinal c'est-à-dire par rapport à la direction de déplacement. La convexité est non nécessairement symétrique c'est dire que l'apex de la convexité peut être décalé par rapport au milieu de la demi-orthèse, c'est-à-dire non nécessairement en partie médiane de la demi-orthèse, ce qui est visible sur la figure 3, particulièrement.

La forme convexe peut aussi être une forme en pente rectiligne avant/arrière ou arrière/avant.

Chaque demi-orthèse 20A, 20B comporte latéralement, aux deux extrémités, avant et arrière, latéralement et extérieurement, des languettes d'appui 22-1A, 22-2A et 22-1B et 22-2B, généralement venues de fabrication avec ladite demi-orthèse, qui constituent les moyens de liaison 14 de l'orthèse avec le sabot, ferré ou non.

Ces languettes sont orientées vers le haut, en saillie au-dessus de la surface supérieure 18A, 18B de chacune des demi-orthèse. Ces deux languettes sont inclinées pour venir en appui sur la paroi du sabot, devant et derrière, suivant une corde de l'arc de la partie latérale de la paroi du sabot, cette corde étant parallèle à la direction longitudinale du sabot, c'est-à-dire à l'axe de déplacement.

Les moyens de liaison 12 des deux demi-orthèses entre elles comprennent, dans le mode de réalisation représenté, des moyens mécaniques réglables, à savoir une tige 24 dont les extrémités sont filetées et avantageusement filetées l'une avec un pas à droite et l'autre avec un pas à gauche. De même chaque demi-orthèse comprend un taraudage avec des pas correspondant à ceux des extrémités de la tige de façon à pouvoir visser. La tige 24 comprend en outre des moyens de manoeuvre 26 en rotation sous forme de facettes comme cela est représenté, par exemple 4 facettes à 90° ou 6 facettes à 60° lesdites facettes étant d'une dimension apte à recevoir une clé plate 28, comme dans le mode de réalisation retenu.

La manoeuvre dans un sens de rotation permet de visser et dans l'autre sens de dévisser.

La manoeuvre de vissage tend à rapprocher les deux demi-orthèses tandis que le dévissage les libère voire les sépare en bout de course.

L'utilisation de demi-orthèses selon la présente invention consiste à choisir tout d'abord un profil convexe ou en pente par exemple.

On note que l'orthèse constituée des deux demi-orthèses s'adapte à tous les sabots, d'un poulain ou poney à un cheval massif. Par contre, il faut éventuellement prévoir des tiges 24 de longueurs différentes.

Eventuellement, selon un perfectionnement de la présente invention, il est aussi possible de choisir le degré de convexité.

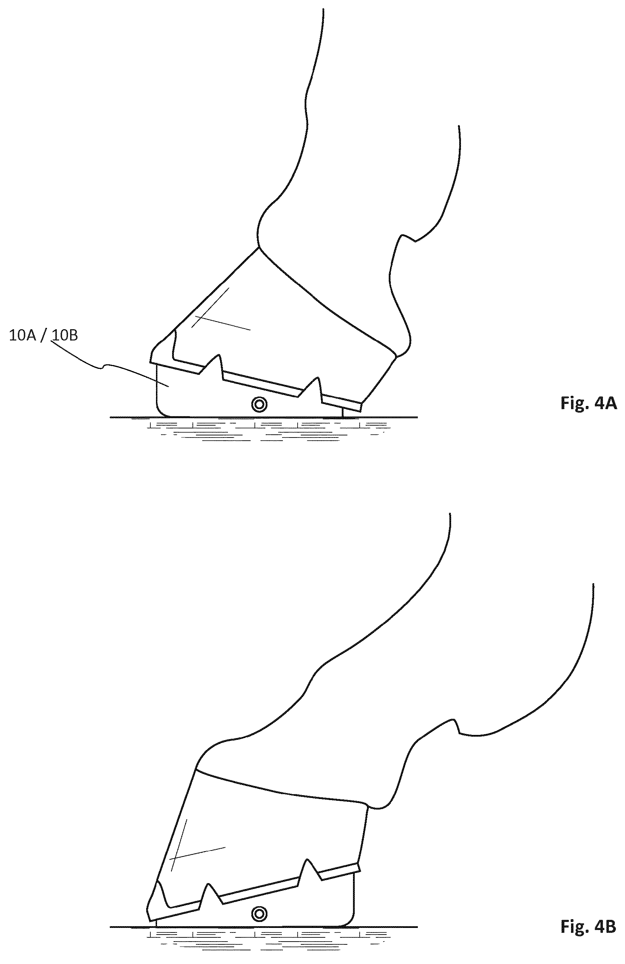

Une fois les demi-orthèses éventuellement choisies en fonction de la pathologie, ce qui relève du praticien en charge de ladite pathologie, il reste encore à prendre chaque demi-orthèse et à choisir l'orientation en fonction des besoins. Les demi-orthèses n'étant pas symétriques, il est nécessaire, en fonction de la pathologie, de choisir le degré de basculement le plus important sur l'avant ou sur l'arrière et la géométrie du basculement comme cela sera illustré sur les figures 4A et 4B.

Une fois les demi-orthèses choisies et l'orientation également déterminée, les deux demi-orthèses sont reliées par les moyens de liaison 12 et plus particulièrement par les extrémités de la tige 24 choisie et pré-vissées dans les taraudages correspondants.

Chaque demi-orthèse est emboîtée sur le sabot de façon que les languettes des moyens de fixation 14 viennent sur la paroi du sabot tandis que la surface supérieure est plaquée contre la sole du sabot ou contre le fer à cheval en place.

Il convient ensuite de manoeuvrer la tige 24 en rotation pour assurer un rapprochement des deux demi-orthèses et donc un placage et un serrage des languettes contre la paroi du sabot, à la façon d'un étau et non des mâchoires d'une pince.

Les demi-orthèses sont alors assujetties au sabot de façon précise et retenues par les languettes.

Le cheval voit alors son membre sollicité de façon adaptée soit pour effectuer des mouvements facilitant la récupération, soit pour travailler avec une géométrie adaptée qui corrige ou permet un travail spécifique.

On note que la mise en place est rapide et simple. Cette mise en place peut donc être effectuée plusieurs fois par jour si nécessaire ou chaque soir et matin dans le cas de traitements de nuit.

On constate aussi que, une fois la prescription déterminée, la mise en place et le retrait peuvent être réalisés par du personnel non vétérinaire et notamment par le personnel assurant l'entretien du cheval.

Les demi-orthèses selon l'invention sont auto-positionnées et ceci de façon parfaitement adaptée. En effet, il existe deux points d'appui formant réaction et un point de traction situé entre lesdits deux points d'appui.

Le résultat est une excellente tenue mécanique des demi-orthèses qui, même si les chevaux portant ces demi-orthèses sont au box ou marchent au pas, ne peuvent être retirées par les mouvements intempestifs du membre équipé lorsque le cheval souhaite se débarrasser de ces demi-orthèses.

L'orthèse selon la présente invention peut être réalisée en métal, bien entendu, mais aussi en matériaux composites ou en alliage léger.

Ceci permet aussi de réaliser des demi-orthèses qui ne transmettent pas les chocs et les vibrations de la même façon que le métal car les matériaux composites peuvent assurer un certain filtrage.

De même, le poids est réduit si bien que seule la géométrie assure le travail sans provoquer d'effets parasites liés au poids des demi-orthèses par exemple, surtout en cas d'un seul membre traité et donc d'une forte dissymétrie engendrée.

Sur les figures 4A et 4B, on a représenté en élévation latérale les variantes de positionnement avec les mêmes demi-orthèses, en l'occurrence deux demi-orthèses, sans convexité mais avec une pente.

Sur la figure 4A, on a représenté une demi-orthèse avec une pente qui s'élève vers l'avant, ce qui aligne mieux le membre et sollicite moins certains tendons par exemple. Dans le cas représenté, la pince du pied est surélevée et cela met en extension le fléchisseur profond du doigt et soulage le fléchisseur superficiel du doigt et le ligament suspenseur du boulet.

Sur la figure 4B, les talons sont surélevés et les effets sont inverses, le tendon fléchisseur profond du doigt étant détendu et les efforts sur le tendon fléchisseur superficiel du doigt et le ligament suspenseur du boulet sont augmentés.

On constate qu'avec les mêmes demi-orthèses on peut traiter une même pathologie à deux stades différents, le premier est le soin par une sous sollicitation et le second par une sur sollicitation pour remettre en condition.

On a décrit des moyens de liaison 12 des demi-orthèses entre elles notamment avec une tige aux extrémités filetées à double pas inversés. Il est aussi possible de prévoir une tête de vis dans un trou borgne afin qu'aucun élément ne vienne en saillie, pouvant provoquer des blessures. L'extrémité de la vis coopère avec un alésage dans l'autre demi-orthèse.

Le montage doit être néanmoins symétrique de façon à permettre un montage après un pivotement horizontal à 180°, tout en conservant la tête de vis du côté intérieur.

## Revendications

1. Orthèse pour un sabot (16) d'un cheval C, muni ou non d'un fer à cheval FC, comprenant deux demi-orthèses orthopédiques (10A, 10B) ayant chacune une face supérieure (18A, 18B) plane et une face inférieure (20A, 20B) en forme, des moyens de liaison (14) entre lesdites deux demi-orthèses et des moyens de liaison (12) desdites deux demi-orthèses audit sabot (16).

2. Orthèse selon la revendication 1, **caractérisée en ce que** chaque demi-orthèse (10A, 10B) présente un face inférieure convexe.

3. Orthèse selon la revendication 1 ou 2, **caractérisée en ce que** chaque demi-orthèse (10A, 10B) est dissymétrique longitudinalement.

4. Orthèse selon la revendication 1, **caractérisée en ce que** chaque demi-orthèse (10A, 10B) présente une face inférieure inclinée.

5. Orthèse selon l'une quelconque des revendications précédentes, **caractérisée en ce que** les moyens de liaison (14) des deux demi-orthèses orthopédiques entre elles consistent en des moyens mécaniques réglables.

6. Orthèse selon la revendication 5, **caractérisée en ce que** les moyens mécaniques réglables comprennent qu'une tige (24) comprenant deux extrémités filetées avec des pas inversés et un taraudage de pas conjugué, ménagé dans chacun des deux demi-orthèses, destiné à recevoir lesdites extrémité fileté, ainsi que des moyens de manoeuvre (26) de ladite tige en rotation.

7. Orthèse selon l'une quelconque des revendications précédentes, **caractérisée en ce que** les moyens de liaison des demi-orthèses (20A, 20B) au sabot (16) comprennent, aux deux extrémités, avant et arrière, latéralement et extérieurement, des languettes d'appui (22-1A, 22-2A et 22-1B, 22-2B), inclinées pour venir en appui sur la paroi du sabot, devant et derrière.

8. Orthèse selon la revendication 7, **caractérisée en ce que** les moyens de liaisons (14) des deux demi-orthèses (10A, 10B) entre elles, sont disposés entre les deux languettes de chaque demi-orthèses.

9. Orthèse selon l'une quelconque des revendications précédentes, **caractérisée en ce que** chaque demi-orthèse (10A, 10B) est réalisée en un matériau choisi parmi les alliages légers ou les matériaux composites.
